# EUROPÄISCHE PATENTSCHRIFT

(11) **EP 1 249 681 B1**
(45) Veröffentlichungstag und Bekanntmachung des Hinweises auf die Patenterteilung: **24.08.2011**
(21) Anmeldenummer: 02003365.0
(22) Anmeldetag: 13.02.2002
(51) Int. Cl.: G01B 7/00, G01B 17/02, G01D 5/48

(54) **Magnetostriktive Wegmessvorrichtung**
Magnetostrictive displacement measuring device
Dispositif magnétostrictif de mesure de déplacement

(30) Priorität: 23.02.2001 DE 10108925
(43) Veröffentlichungstag der Anmeldung: 16.10.2002
(73) Patentinhaber: ASM AUTOMATION, SENSORIK, MESSTECHNIK GMBH, D-85452 Moosinning (DE)
(72) Erfinder: Steinich, Klaus-Manfred, 85604 Poering-Zorneding (DE)
(74) Vertreter: Müller, Gerald Christian

(56) Entgegenhaltungen:
- DE-A- 4 306 951
- US-A- 3 898 555
- US-A- 4 678 993
- US-A- 5 150 049
- US-A- 5 313 160

## Beschreibung

### I. Anwendungsgebiet

Die Erfindung betrifft eine magneto-striktive Wegmeß-Vorrichtung.

### II. Technischer Hintergrund

Das Grundprinzip einer solchen Vorrichtung besteht darin, daß ein Wellenleiter aus einem sowohl elektrisch leitenden als auch magnetisierbarem Material in Meßrichtung, der Längsrichtung der Vorrichtung, verläuft, insbesondere in leicht gespanntem Zustand.

Ein Magnet ist mit demjenigen Bauteil, dessen Position in Längsrichtung gemessen bzw. überwacht werden soll, verbunden und wird durch dieses Bauteil in Längsrichtung entlang des Wellenleiters berührungslos, jedoch in ausreichend geringem Abstand, bewegt.

Ein in den Wellenleiter eingegebener Stromimpuls bewirkt in Wechselwirkung mit dem Magneten eine mechanische Welle, die von der Position des Magneten aus den Wellenleiter entlang läuft und hinsichtlich ihrer Laufzeit von der Auswerteelektronik, die meist am einen Ende des Wellenleiters angeordnet ist, detektiert wird, woraus die Längsposition des Magneten und damit des zu überwachenden Bauteiles relativ zum Wellenleiter bekannt ist.

Da derartige Wegmess-Vorrichtungen häufig in Maschinen, auch in produzierenden Maschinen, eingesetzt werden, müssen sie eine Reihe von Forderungen erfüllen wie Schutz der Meßvorrichtung gegen mechanische Beschädigung und Verschmutzung, insbesondere gegen Eindringen von Feuchtigkeit in die Auswerteelektronik, Beibehaltung des ursprünglichen Spannungszustandes des Wellenleiters, Abschirmung der elektromagnetischen Strahlung der Auswerteelektronik nach außen und innen, montage- und wartungsfreundlichkeit der Meßvorrichtung.

Zum einen ist es diesbezüglich bereits bekannt, den Wellenleiter in einer stützenden, jedoch nicht zu stark dämpfenden Umhüllung aufzunehmen und in dieser Form als Wellenleiter-Einheit zu handhaben.

Zum anderen ist es bereits bekannt, den Wellenleiter bzw. die erwähnte Wellenleiter-Einheit geschützt im Inneren eines am Umfang geschlossenen hohlen Rohr-Profiles anzuordnen, welches kostengünstig als Strangpreß-Profil herstellbar ist.

Das US-Patent 5,313,160 zeigt eine gattungsgemäße magnetostriktive Wegmess-vorrichtung, bei der in der Außenkontur des Profiles ein Paar von Außennuten vorhanden ist, von denen sich jede in einer von zwei gegenüberliegenden Außenflächen befindet.

Die DE 43 06 951 A1 zeigt als nächstreichender Stand der Technik bei einer ebenfalls gattungsgemäßen Wegmessvorrichtung sogar zwei solcher Paare von Außennuten in der Außenkontur, von denen ein Paar zusätzlich eine hinterschnittene Form besitzt. Allerdings ist nicht jeder der Außenflächen jeweils ein Paar von Außennuten zugeordnet.

Des Weiteren zeigt diese Schrift in der Innenkontur einander gegenüberliegende Nuten zum Einschieben einer Platine, und eine umschlossene Nut, also eine Bohrung, für eine Wellenleitereinheit.

Die Innenkontur ist dabei so verzweigt, dass beim Ausfräsen der Innenkontur bis auf einen runden Innendurchmesser das vorher umlaufend geschlossene Profil durchbrochen würde.

Darüber hinaus,sind aus US 5 150 0049, US 3 898 555, US 4 678 993 gattungsgemäße Wegmessvorrichtungen bekannt, bei denen das die Wellenleitereinheit schützende Profil eine einfache runde oder viereckige sowohl Außen- als auch Innenkontur besitzt, jedoch ohne Außennuten.

### III. Darstellung der Erfindung

### a) Technische Aufgabe

Die Aufgabe der vorliegenden Erfindung besteht darin, trotz einfacher Herstellbarkeit der Vorrichtung deren Platzbedarf so gering wie möglich zu halten, und gleichzeitig einen optimalen Schutz der Vorrichtung vorzusehen, sowie die Beweglichkeit des zu überwachenden Bauteiles gegenüber dem Wellenleiter hierdurch nicht zu sehr einzuschränken.

### b) Lösung der Aufgabe

Diese Aufgabe wird durch die Merkmale der Ansprüche 1, 16, 24 und 34 gelöst. Vorteilhafte Ausführungen ergeben sich aus den Unteransprüchen.

Die Außenkontur des Profiles dient neben der Erzielung einer hohen Verwindungssteifigkeit dieser Profilform der Befestigung des Profiles an einem Bauteil der Umgebung, beispielweise der zugrunde liegenden Maschine, sowie der Führung eines Schlittens mit dem Magneten in Längsrichtung des Profiles.

Die Außenkontur des Profiles weist eine starke Wechselwirkung mit der Innenkontur auf, da nur im richtigen Zusammenspiel der beiden Konturen bei geringem Materialverbrauch und damit auch geringem Gewicht eine ausreichende Verwindungssteifigkeit dieses Profiles bewirkt wird, die einerseits die Meßgenauigkeit der Vorrichtung bedingt und andererseits den gewünschten Schutz vor mechanischer Beschädigung der Meßvorrichtung.

Die Außenkontur des Profiles ist polygonal, insbesondere rechteckig.

Die Außenflächen des Profiles sind vorzugsweise ebene, insbesondere mehrteilige, Außenflächen, wobei - wie an sich bereits bekannt - nur die Randbereiche dieser Außenflächen zueinander parallele Teil-Außenflächen bilden, und der übrige mittige Teil demgegenüber zurückversetzt ist. Beim Anlegen an eine gegenüberliegende Planfläche liegen damit nur die Randbereiche an, so daß bei einer unebenen Gegenfläche eine sichere, definierte Anlage gegeben ist.

Jeder Außenfläche sind zwei beabstandete, also ein Paar, von Außennuten, insbesondere identischen Außennuten, zugeordnet, wobei es sich insbesondere um in den Eckbereichen des Außenprofiles angeordnete Ecknuten handelt.

Zusätzlich ist in einer der Außenflächen, insbesondere genau in deren Mitte, eine Mittelnut angeordnet, so daß die Außenkontur symmetrisch zur durch die Mittelnut verlaufende Längsmittelebene des Profiles ist.

Ecknut und/oder Mittelnuten sind vorzugsweise hinterschnitten, wobei die Ecknuten Flanken aufweisen, die parallel zu einer der Außenflächen verlaufen.

Da die Ecknuten vorzugsweise symmetrisch zur Winkelhalbierenden der Ecke, in der sie angeordnet sind, ausgebildet sind, weist dann jede Ecknut zwei solcher Flanken auf, die parallel jeweils zu einer der angrenzenden Außenflächen verlaufen, wodurch die Ecknuten insbesondere eine etwa dreieckige oder trapezförmige Grundform besitzen. Dabei sind die durch die zur Außenfläche parallelen Flanken gebildeten, frei endenden Vorsprünge, die zwischen sich die Ecknut aufnehmen, soweit voneinander beabstandet, daß zwischen dem freien Ende eines solchen Vorsprunges - gemessen in Erstreckung des Vorsprunges zu dem gegenüberliegenden Vorsprung derselben Ecknut - ein Abstand verbleibt.

Ebenso wie die Ecknuten sind vorzugsweise auch die Mittelnuten symmetrisch zu ihrer Mittelebene, in diesem Fall der Mittelebene des ganzen Profiles, ausgebildet.

Die Mittelnut weist vorzugsweise zwei in stumpfem Winkel voneinander wegweisende Ausnehmungen auf, die zwischen sich einen Boden bilden und damit einen etwa dachförmigen Querschnitt der Mittelnut bewirken. Der Boden der Mittelnut zwischen den beiden tiefer hinabragenden Ausnehmungen stellt einen Teil oder vollständig den abgesenkten mittleren Bereich derjenigen Außenfläche dar, in welcher sich die Mittelnut befindet.

Entlang der Außenkontur des Profiles kann ein Schlitten verfahren werden, der durch die Außenkontur formschlüssig vom Profil gehalten wird in allen Richtungen quer zur Längsrichtung.

In der Regel wird der Schlitten dabei entlang einer der Außenflächen geführt, und greift zu diesem Zweck formschlüssig entweder in die Mittelnut oder in die beidseits der gewünschten Außenfläche vorhandenen Ecknuten ein. In beiden Fällen ist in der Regel gewünscht, daß diejenige Außenfläche, entlang welcher der Schlitten verfahren wird, durch den Schlitten weitestgehend abgedeckt wird, um Verschmutzungen dieser Außenfläche zu vermeiden. Zu diesem Zweck weist der Schlitten in etwa einen dachförmigen Querschnitt auf, der die entsprechende Außenfläche abdeckt und an dieser möglichst grossflächig anliegt oder hierzu nur einen sehr geringen Abstand einnimmt.

Sofern der Schlitten in der Mittelnut geführt ist, greift er mit entsprechenden Fortsätzen in die Ausnehmungen der Mittelnut ein, hält jedoch zu deren mittleren Boden einen Abstand zur Verringerung der Reibung. Insbesondere besitzen die in die Ausnehmungen eingreifenden Fortsätze des Schlittens einen gerundeten oder runden Querschnitt, um die Anlageflächen zwischen Fortsätzen und Ausnehmungen zu minimieren.

Um auch bei nicht vollständiger Parallelität des Wellenleiters, also des ihn aufnehmenden Profiles, mit dem zu überwachenden Bauteil den Einsatz der Meßvorrichtung nicht zu verhindern, muß eine bewegliche Befestigung des Bauteiles mit dem Schlitten möglich sein.

Zu diesem Zweck weist der Schlitten am Befestigungspunkt ein Gelenk auf, welches eine Bewegungsmöglichkeit z. B. einer Verbindungsstange, welche den Schlitten mit dem zu überwachenden Bauteil verbindet, gegenüber dem Schlitten gewährleistet. Dieses Schlittengelenk muß nur eine begrenzte Beweglichkeit, insbesondere um eine quer zur Ebene der Außenfläche, entlang welcher der Schlitten geführt wird, stehenden Schwenkachse aufweisen.

Die Innenkontur des Profiles, insbesondere im Folgenden genannten Rohrprofiles, ist vorzugsweise doppelt spiegelbildlich, also mittensymmetrisch, ausgebildet, einerseits zur Längsmittelebene der Außenkontur und andererseits zu einer hierzu im rechten Winkel liegenden Querebene.

Die Innenkontur des Profils liegt innerhalb eines Begrenzungskreises, wobei die Außenkontur in diesen Kreis an keiner Stelle hineinragt, so daß das Ausfräsen der Innenkontur zu einer entsprechend vollständigen Kreiskontur bis maximal zum Begrenzungskreis, insbesondere an den stirnseitigen Enden des Rohrprofiles zum Einbringen anderer Baugruppen möglich ist.

Die Innenkontur weist zwei einander gegenüberliegende, insbesondere gegenüber der Längsmittelebene gegenüberliegende, Abschnitte auf, die über Planflächen als Bestandteil der Innenkontur miteinander verbunden sind, die insbesondere parallel zueinander und insbesondere parallel zu derjenigen Außenfläche liegen, in der die Mittelnut angeordnet ist. In diesen Planflächen sind - einander bezüglich der Querebene symmetrisch gegenüberliegend - mindestens 1, insbesondere 2, Paare von Platinennuten, oder, bzw. insbesondere zusätzlich, ein Paar von Leiternuten angeordnet. Das Paar Leiternuten liegt dabei insbesondere auf der Längsmittelebene.

Sowohl Platiennuten als auch Leiternuten weisen einen hinterschnitten Querschnitt auf, wobei die Leiternut vorzugsweise einen mehr als 180° umfassenden Abschnitt eines Kreisprofiles als Querschnitt besitzt, während die Platinennuten eine gegenüber einem solchen teilweise kreisförmigen Querschnitt weiter in die Tiefe ragenden Fortsatz in ihrem Querschnitt aufweisen. Zusätzlich ist der Querschnitt der Leiternut deutlich größer als der der Platinennuten, da der kleinste freie Querschnitt der Platinennuten der Dicke des Platinenmaterials, insbesondere des Materials der später zu beschreibenden Platinenhalter, ist. Diese Nuten der Innenkontur dienen dem Einschieben von Bauteilen, die zur Auswerteelektronik der Wegmeß-Vorrichtung gehören. In eine oder sogar beide Leiternuten kann eine Wellenleiter-Einheit eingeschoben werden. In die Platinennuten können Platinen, die Teile der Auswerteeinheit tragen, oder Platinenhalter, an denen dann diese eine oder mehreren Platinen der Auswerteelektronik befestigt sind, eingeschoben werden. Zusätzlich können diese Platinennuten aufgrund ihrer Formgebung zum stirnseitigen Verschrauben von Baugruppen, etwa Deckeln, dienen, indem in die stirnseitig offenen Enden dieser Platinen insbesondere selbstschneidende Schrauben einschraubbar sind.

Ein Verrutschen in Längsrichtung derartiger Baugruppen in den Platinennuten wird durch rutschhemmendes Material, insbesondere einen um die eingeschobenen Platinen bzw. Platinenhalter herumgelegten O-Ring sichergestellt, der in den Querschnitt der Platinennuten mitaufgenommen wird.

Damit ist es möglich - durch Wahl des Rohrprofiles in seiner Länge etwas länger als die beabsichtigte Länge des Wellenleiters - die Auswerteelektronik ebenfalls vollständig innerhalb des umfänglich geschlossenen Rohrprofiles unterzubringen.

Durch Verschließen des Rohrprofiles an den stirnseitigen, offenen Endflächen, durch Abschlußdeckel, die entweder ins Innere des Rohrprofiles eingesetzt oder stirnseitig auf das Rohrprofil aufgesetzt werden, ist eine sowohl gegen Schmutz als auch elektromagnetische Abstrahlung sehr gute Abdichtung des Inneren des Rohrprofiles und damit der gesamten Vorrichtung möglich.

Um den Deckel an seinem Außenumfang gegenüber dem Innenumfang des Rohrprofiles auf einfache Art und Weise, beispielsweise mittels eines zwischengelegten O-Ringes, zuverlässig abdichten zu können, wird die Innenkontur des Rohrprofiles in den Endbereichen zu einer vollständigen inneren Kreiskontur erweitert durch Ausfräsen oder Ausbohren.

Ein elektrisches Anschließen der Wegmeß-Vorrichtung zu einer außen liegenden anderen Baugruppe erfolgt über einen Stecker, der vorzugsweise in einem der Abschlußdeckel, also stirnseitig, angeordnet ist. Der Raumbedarf für den Querschnitt der Wegmeßvorrichtung ist daher begrenzt auf den Außenumfang des Rohrprofiles, sofern die Abschlußdeckel über diesen nicht vorstehen, oder den zusätzlichen Oberstand, sowie um den Querschnitt des außen entlang des Profiles geführten Schlittens.

### c) Ausführungsbeispiele

Ausführungsformen gemäß der Erfindung sind im folgenden beispielhaft näher beschrieben. Es zeigen:
- Figuren 1:: die Vorrichtung ohne Schlitten in mehreren Ansichten,
- Figuren 2:: einen Bereich der Vorrichtung mit Schlitten in unterschiedlichen Ansichten,
- Figur 3:: eine Querschnittsdarstellung der Vorrichtung gemäß Fig. 2 mit einer geringfügigen Änderung am Schlitten,
- Figuren 4:: Längsschnitte durch eine Wegmeß-Vorrichtung ohne Schlitten,
- Figuren 5:: Schnittdarstellung einer anderen Bauform der Wegmeß-Vorrichtung,
- Figuren 6:: Längsschnitt der Vorrichtung gemäß Fig. 5,
- Fig. 7:: ein erster Querschnitt der Bauform gemäß Fig. 5 und 6,
- Fig. 8:: ein zweiter Querschnitt der Bauform gemäß Fig. 5 und 6,
- Fig. 9:: eine Querschnittsdarstellung gemäß Fig. 2c einer weiteren Bauform der Vorrichtung,
- Figuren 10:: Darstellungen einer wiederum anderen Bauform der Vorrichtung,
- Figuren 11-14:: Detaildarstellungen von Endbereichen weiterer Bauformen der Vorrichtung,
- Figuren 15-17:: Darstellungen der Befestigung des Profiles 1 in verschiedenen Varianten, und
- Fig. 18:: einen Längsschnitt durch eine weitere Bauform.

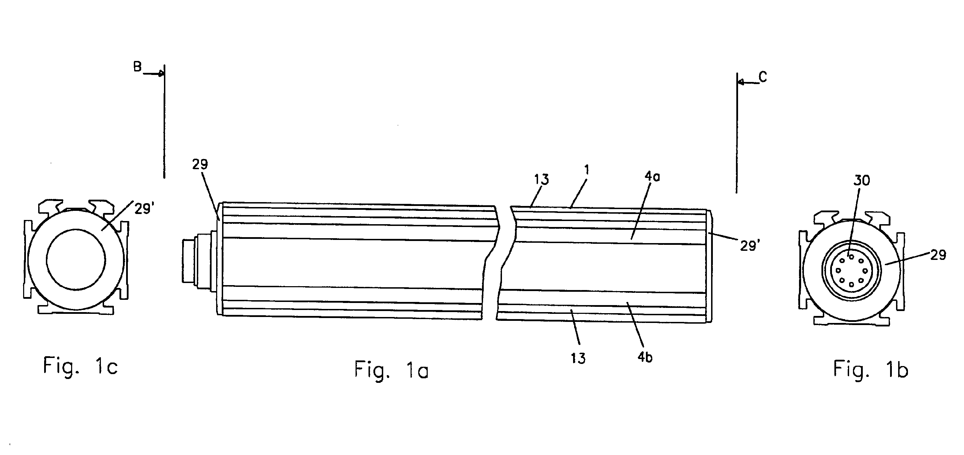

Die Figuren 1 zeigen die fertig montierte Wegmeß-Vorrichtung, jedoch ohne aufgesetzten Schlitten.

Von der Vorrichtung ist das Profil 1 zu sehen, welches in der Regel ein auf die gewünschte Länge abgelängtes Stück eines Strangpreß-Profiles, meist aus Aluminium, oder einem anderen EMV-abschirmenden Material, ist, welches an den offenen Stirnseiten mit Abschlußdeckeln 29, 29' verschlossen ist.

Wie die Stirnansichten der Fig. 1b und 1c zeigen, ist dabei der eine Abschlußdeckel 29' ein reiner Verschlußdeckel, während der andere Abschlußdeckel 29 eine zentrale mittige Öffnung aufweist, in welcher ein Stecker 30 eingesetzt ist, der die elektrische Verbindung der Vorrichtung nach außen sicherstellt.

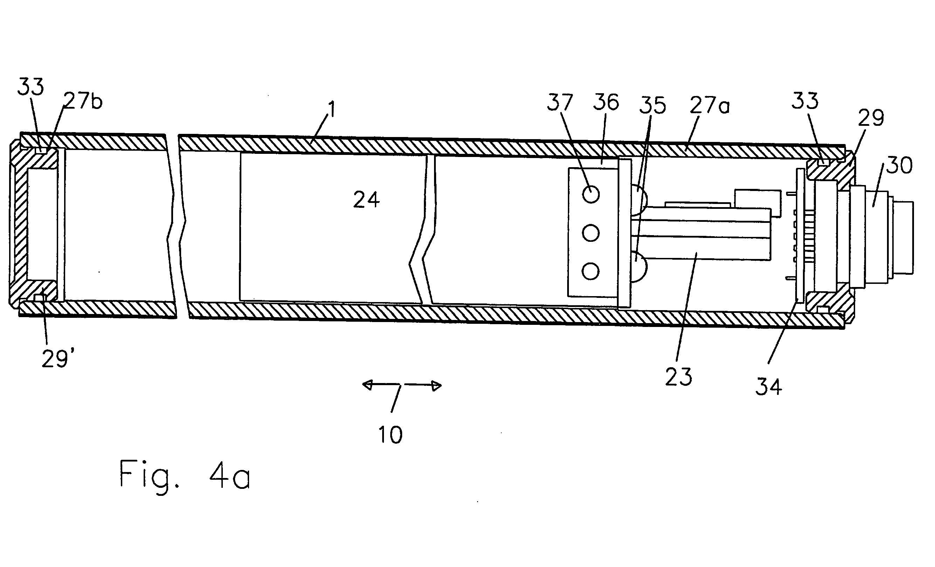

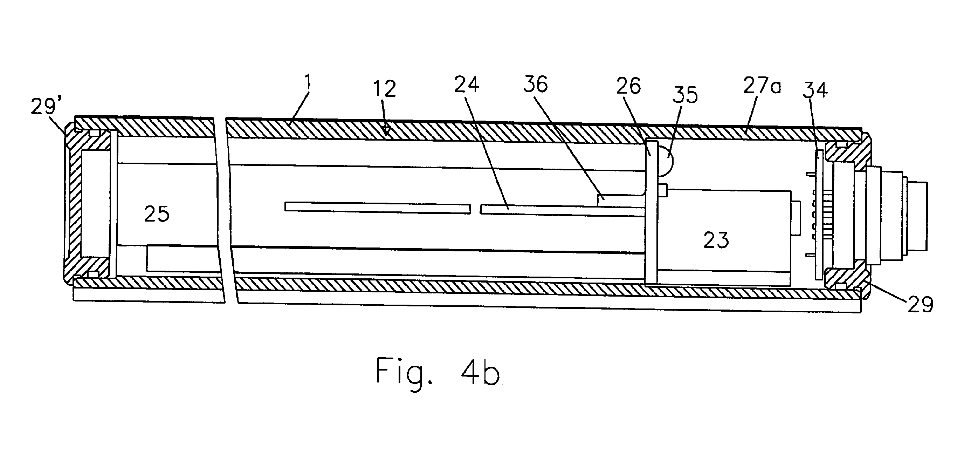

Die beiden Abschlußdeckel 29, 29' stehen dabei nicht über den Außenumfang des Profils 1 vor, und stehen gem. Fig. 1a auch stirnseitig nur geringfügig vor, um eine Anlage an der Stirnfläche des Profils 1 und damit eine in Längsrichtung definierte Position zu erreichen, wie besser in den Längsschnittdarstellungen der Fig. 4a und 4b dargestellt.

Dort ist zu erkennen, daß sich die Abschlußdeckel 29, 29' etwas ins Innere des Rohrprofiles hinein erstrecken.

Dabei ist zu erkennen, daß in den Endbereichen das Rohrprofil 1 einen aufgeweiteten Innenquerschnitt 27a, b aufweist, der zu einem runden Innenquerschnitt aufgebohrt oder aufgefräst wurde, so daß der in diesen erweiterten Innenquerschnitt 27a, hineinreichende Abschlußdeckel 29, 29' mittels eines einfachen, in einer Außenumfangsnut 33 des Abschlußdeckels 29, 29' aufgenommenen O-Ringes abgedichtet werden kann.

Die Abschlußdeckel 29, 29' sind im Rohrprofil 1 verklebt, verklemmt oder auch verschraubt, und wie Fig. 4a und 4b zeigen, ist der Stecker 30 ebenfalls dicht in dem Abschlußdeckel 29 aufgenommen.

Der Stecker besitzt auf seiner Innenseite, also innerhalb des Abschlußdeckels 29, eine Anschlußplatine 34, die der Verbindung mit der Auswerteelektronik 12 im Inneren des Profiles dient und bereits deren Schutzbeschaltung trägt. Diese besteht gemäß den Fig. 4a und 4b aus einer Hauptplatine 23 und einer Nebenplatine 24, die in Längsrichtung des Profiles hintereinander und im Winkel zueinander im Inneren des Rohrprofiles angeordnet sind:

Die Hauptplatine 23 ist an einem Querverbinder 26 befestigt, der am Ende des aufgewerteten Innenquerschnittes 27a auf die ursprüngliche Innenprofilform stirnseitig aufgesetzt und über zwei Schrauben 35, die in das später zu erwähnende Profil eingeschraubt sind, befestigt ist.

Von der anderen Seite dieses Querverbinders 26 ragen zwei Platinenhalter 25 ins Innere des nicht aufgeweiteten, normalen Querschnittes des Rohrprofiles 1, in die quer die Nebenplatine 24 eingeschoben und an einem Haltewinkel 36 des Querverbinders 26 über Lötpunkte 37 fixiert ist.

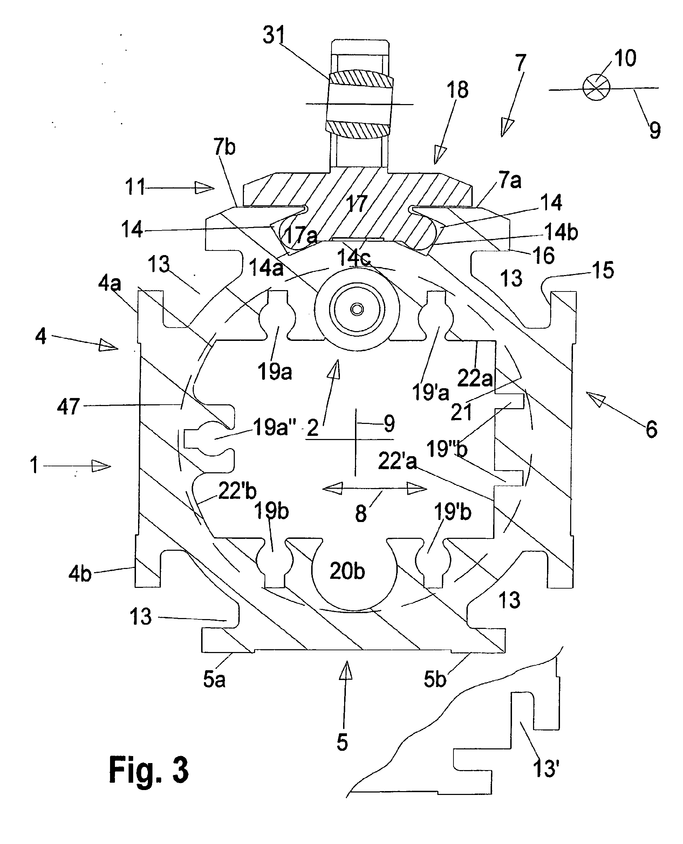

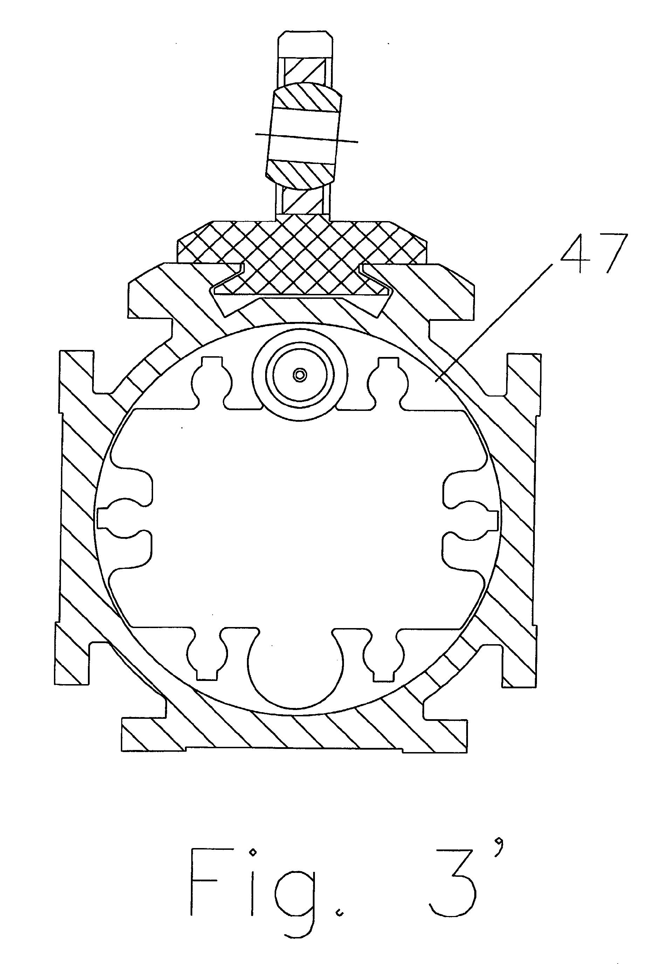

Fig. 3 zeigt in vergrößerter Darstellung die Querschnittsform des Profiles 1 mit einem daran an der Außenfläche geführten Schlitten 11:

Die Innenkontur des Profiles 1 besteht aus einer auf zwei einander gegenüberliegenden Seiten in Form von Planflächen 22a, b abgeflachten Kontur.

In den Planflächen 22a, b sind Nuten eingearbeitet, und zwar einander symmetrisch gegenüberliegend in der Mitte jeweils eine Ω-förmige, also hinterschnittene, Leiternut 20, und links und rechts davon jeweils eine kleinere, ebenfalls hinterschnittene, Platinennut 19a, 19'a bzw. 19b, 19'b, die eine-gegenüber der Ω-Form am Nutengrund weiter vertiefte Form aufweist. Diese Nut im Boden der Ω-Form weist eine Breite entsprechend der Dicke einer üblichen Platine auf, und ebenso deren vorderes freies Ende.

In den eben oder unregelmäßig geformten, die Planflächen 22a,b verbindenden Querflächen 22'a,b können - wiederum einander gegenüberliegend - wiederum Paare von Platinennuten 19a", 19b" angeordnet sein, entweder mit gleicher Gestaltung wie die übrigen Platinen Nuten (wie in der linken Bildhälfte dargestellt) oder auch mit einfacher Rechteckform 19b', wie in der rechten Bildhälfte dargestellt, so daß auch in dieser Lage entsprechend dimensionierte Platinen einschiebbar sind.

Dadurch, daß auch die Platinennuten 19 und die Leiternuten 20 innerhalb des Begrenzungskreises 47 liegen, der noch gegenüber der Außenkontur eine ausreichende Wandstärke besitzt und das Profil 1 auf der Außenseite einen rechteckigen, fast quadratischen Querschnitt besitzt, verbleibt in den Eckbereichen Platz, um dort die Außenkontur des Profiles mit Ecknuten 13 auszustatten, die zwischen jeweils zwei insbesondere im rechten Winkel aneinander angrenzenden Außenflächen 4 bis 7 angeordnet sind und einen etwa trapezförmigen Querschnitt mit der kleinen Seite als Öffnung und damit eine hinterschnittene Form besitzen.

Jede Ecknut wird damit von zwei im Winkel zueinander weisenden Vorsprüngen begrenzt, die auf der Innenseite, also zur Ecknut 13 hin, somit jeweils eine Flanke 15 aufweisen, die parallel zu der auf dieser Seite außenliegenden Außenfläche 4, 5, 6, 7 des Profiles verläuft und zum Festspannen des Profiles 1 an einem anderen Bauteil benutzt werden kann.

Die Ecknut kann auch die alternativ dargestellte Form eines diagonal halbierten, ansonsten symmetrisch ausgebildeten Kreuzes haben, so daß die Arme des Kreuzes die Ausnehmungen der Nut darstellen.

Um eine sichere Anlage an einer solchen, nicht dargestellten, anderen Fläche zu ermöglichen, sind die Außenflächen 4 bis 7 zwar in sich plan ausgebildet, weisen jedoch nur in ihren Randbereichen zueinander fluchtende Teilflächen 4a, 4b, 5a, 5b.. auf, während der mittlere Bereich der Außenflächen demgegenüber zurückversetzt ist.

Dabei genügt es, wenn die Teilflächen so schmal sind, daß sie nur Berührungslinien bilden, sofern mindestens zwei solcher Berührungslinien parallel und im Abstand zueinander verlaufen und damit eine sichere Auflage an einer Gegenfläche ermöglichen.

Auf einer der Außenflächen ist zusätzlich auf der Längsmitte eine Mittelnut 14 angeordnet, die ebenfalls hinterschnitten ausgebildet ist, indem sie zwei unter stumpfen Winkel voneinander wegweisende Ausnehmungen 14a, b aufweist, die über einen Boden 14c der Nut miteinander verbunden sind, welcher parallel zu derjenigen Außenfläche liegt, in der die Mittelnut 14 angeordnet ist.

In dieser Mittelnut 14 wird ein Schlitten 11 geführt, der einstückig aus einem Dach·18 und einem Mittelteil 17 - im Querschnitt betrachtet - besteht, wobei vom Dach 18 aus nach außen ein Befestigungsfortsatz abragt, in dem eine seitlich abstehende Verbindungsstange 31 gelenkig, beispielsweise über das dargestellte Teil-Kugelgelenk, befestigt ist.

Der Schlitten 11 weist von seinem Mittelteil 17 aus nach schräg unten abragende Fortsätze 17a, 17b auf, die in die Ausnehmungen 14a, b der Mittelnut 14 passen. Die Fortsätze 17a, b weisen eine gerundete Außenkontur auf, um die Anlagefläche an der Mittelnut 14 zu verringern. Ebenso liegt das Mittelteil 14 auch nicht am Boden 14c der Mittelnut an, und das Dach 18, dessen Übergang zum Mittelteil 17 stark gerundet ausgeführt ist, liegt höchstens mit seinen äußeren freien Enden auf der Oberseite der Außenfläche 7 links und rechts der Mittelnut 14 an, um ein Eindringen von Schmutz in die Mittelnut 14 zu verhindern.

Fig. 3' zeigt einen Blick in die Stirnseite eines bereits bis zum Begrenzungskreis 47 aufgeweiteten Innenquerschnittes. Dabei liegt der Schlitten 11 nur mit der Oberseite seiner Fortsätze 17a nur an den oberen Flanken der Mittelnut 14 an.

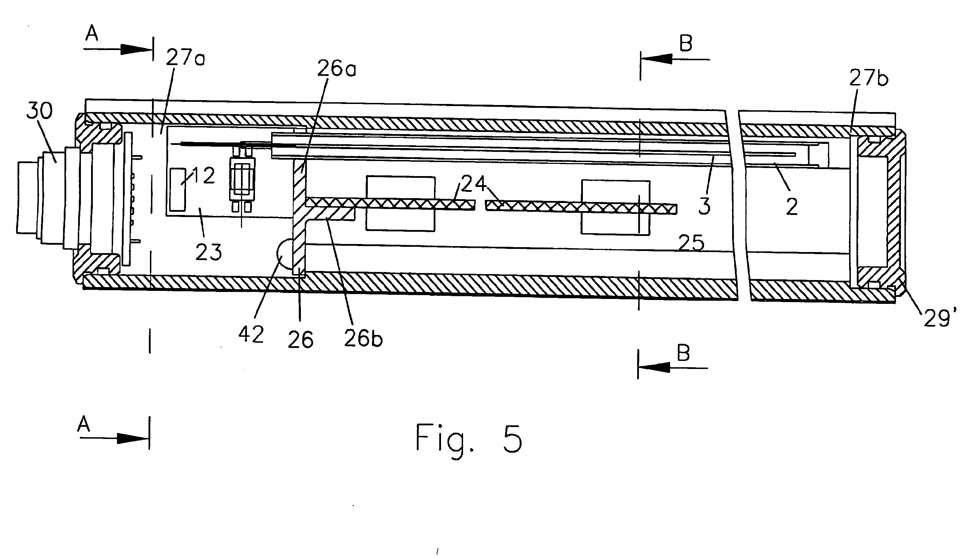

Die Anordnung der anderen Baugruppen im Inneren des Profiles 1 zeigen die Fig. 5 bis 8:

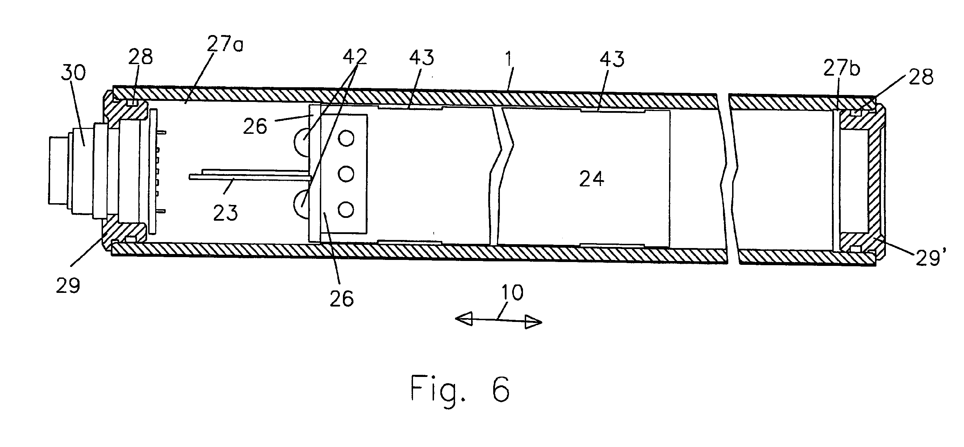

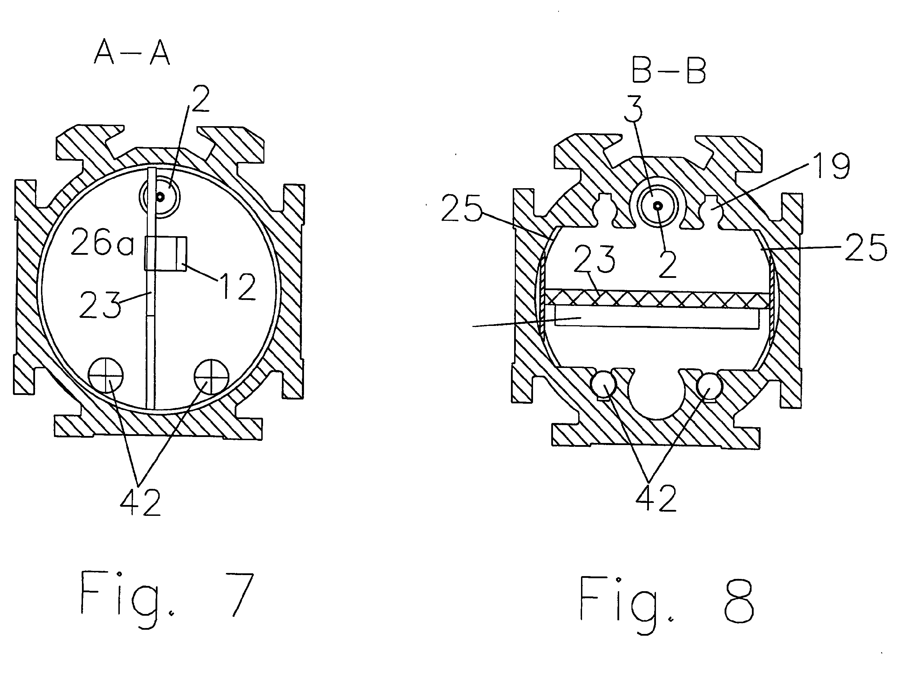

Dabei zeigt Fig. 5 den Einbauzustand mit umgebendem Profil 1 im Längsschnitt, sowie Fig. 6 die gleiche Bauform in einem um 90° demgegenüber gedrehten Längsschnitt. Die Figuren 7 und 8 sind Querschnitte durch die Bauform der Fig. 5 bzw. 6 entsprechend der Linien A-A und B-B.

Wie am besten in Fig. 5 zu sehen, ist am einen Ende der Wellenleitereinheit 2, die aus einer Abstützung und zentral darin geführtem Wellenleiter 3 besteht, am einen Ende eine Hauptplatine 20 befestigt, deren Hauptebene - siehe Fig. 7 - in Längsrichtung 10 als auch auf der Symmetrieebene des Profiles 1 verläuft.

Am Übergang zwischen der Wellenleitereinheit 2 und der Hauptplatine 23, auf der sich Teile der Elektronik 12 befinden, befindet sich ein Querverbinder 26 in Form einer ebenen Platte 26a und eines davon lotrecht abstrebenden Schenkels 26b, wobei die Kontur der Platte 26a in den aufgeweiteten Innenquerschnitt 27a paßt, indem sich somit die Hauptplatine 23 befindet, während der Querverbinder 26 am Ende des aufgeweiteten Innenquerschnitts 27a an der normalen Innenkontur des Profiles 1 stirnseitig anliegt und dort verschraubt ist mittels Schrauben 42, die sich an den entsprechenden Stellen durch den Querverbinder 26 hindurch in die Platinennuten 19 in der unteren Bildhälfte der Fig. 8 hinein erstrecken, also auf der von der Wellenleitereinheit 2 abgewandten Seite.

Mit der Platte 26a des Querverbinders ist sowohl die Wellenleitereinheit 2 als auch die eine Endkante der Hauptplatine 23 verbunden. Zusätzlich ist an dem Querschenkel 26b des Querverbinders 26, der parallel zur Wellenleitereinheit 2 von der Hauptplatine 23 aus weg in den nicht aufgeweiteten Innenquerschnitt des Profiles 1 ragt, wenigstens eine Nebenplatine 24 befestigt, die ebenfalls Teile der Elektronik trägt. Die wenigstens eine Nebenplatine ist über einen Platinenhalter 25 im Innenquerschnitt des Profiles 1 in Längsrichtung 10 verschiebbar, jedoch in allen anderen Richtungen formschlüssig fixiert:

Zu diesem Zweck weist die Nebenplatine an ihren Längsaußenkanten Einbuchtungen 43 auf den beiden einander gegenüberliegenden Seiten auf, deren Tiefe etwas größer ist als die plättchenförmigen Platinenhalter 25, die - ebenfalls in Längsrichtung verlaufend, jedoch etwa lotrecht zur Ebene der Nebenplatine 24 und damit etwa parallel zur Hauptplatine 23 stehend - in diese Einbuchtungen 43 eingesetzt sind und aufgrund ihrer Eigenelastizität sich mit ihrer Außenfläche an der Innenkontur des Profiles 1 abstützen.

Nach Verdrahten der einzelnen Baugruppen, insbesondere der Nebenplatinen 24 und der Hauptplatine 23, wird die gesamte Baugruppe mit dem von der Hauptplatine 23 abgewandten Ende der Wellenleitereinheit 2 voraus und von der Seite des aufgeweiteten Innenquerschnittes 27a her in den nicht aufgeweiteten Innenquerschnitt des Profiles 1 eingeschoben, wobei die Platinenhalter 25 sich in den Einbuchtungen 43 der Nebenplatine 24 befinden und zusammen mit diesen in Längsrichtung 10 eingeschoben werden, bis der Querverbinder 26 mit seiner Querplatte an der Frontseite des nicht aufgeweiteten Innenquerschnitts anliegt und über die Schrauben 42 mit diesem verschraubt wird. Anschließend wird der in den einen Abschlußdeckel 29 eingesetzte Stecker mit den inneren Baugruppen verdrahtet und der Abschlußdeckel 28 in den aufgeweiteten, kreisförmigen Innenquerschnitt soweit eingeschoben, bis der Deckel 29 beispielsweise mit einer nach außen ragenden Schulter an der vorderen Stirnfläche des Profils 1 anliegt. Dabei erfolgt die Abdichtung zwischen Deckel 29 und Profil 1 durch einen in eine umlaufende äußere Ringnut 28 eingelegten, in den Figuren nicht dargestellten, O-Ring, der den Deckel gegenüber dem kreisförmig erweiterten Innenquerschnitt 27a abdichtet. Die Fixierung des Deckels 29 geschieht über Verkleben, Verklemmen und manchmal auch Verschrauben. In gleicher Weise, jedoch lediglich mit einem Deckel 29', der stirnseitig geschlossen ist und keinen Stecker 30 trägt, erfolgt das Verschließen des anderen Endes, wobei dort die axiale Erstreckung des aufgeweiteten Innenquerschnitts 27b kürzer ist, da keine Elektronik und zugehörige Platine, sondern lediglich der Deckel 29' dort aufgenommen werden muß.

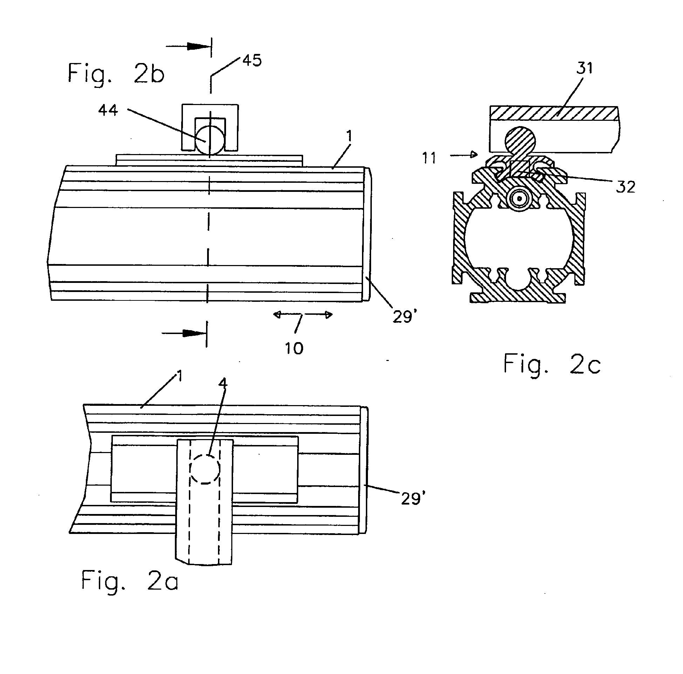

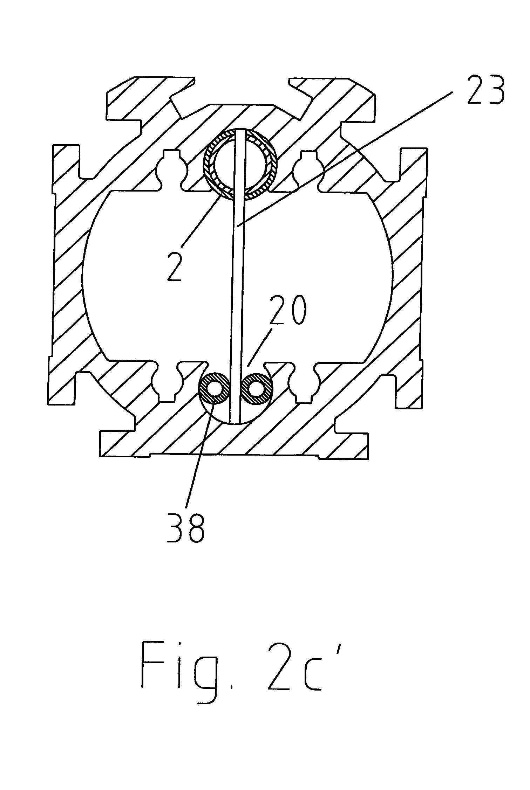

Fig. 2c' zeigt eine Lösung, bei der sich die Hauptplatine 23 von der Wellenleitereinheit 2 bis in die gegenüberliegende Leiternut 20 erstreckt und durch mittels eines aus Elastomer, z. B. einem Schlauch, beidseits der Platine 23 in der Leiternut 20 kraftschlüssig sitzt.

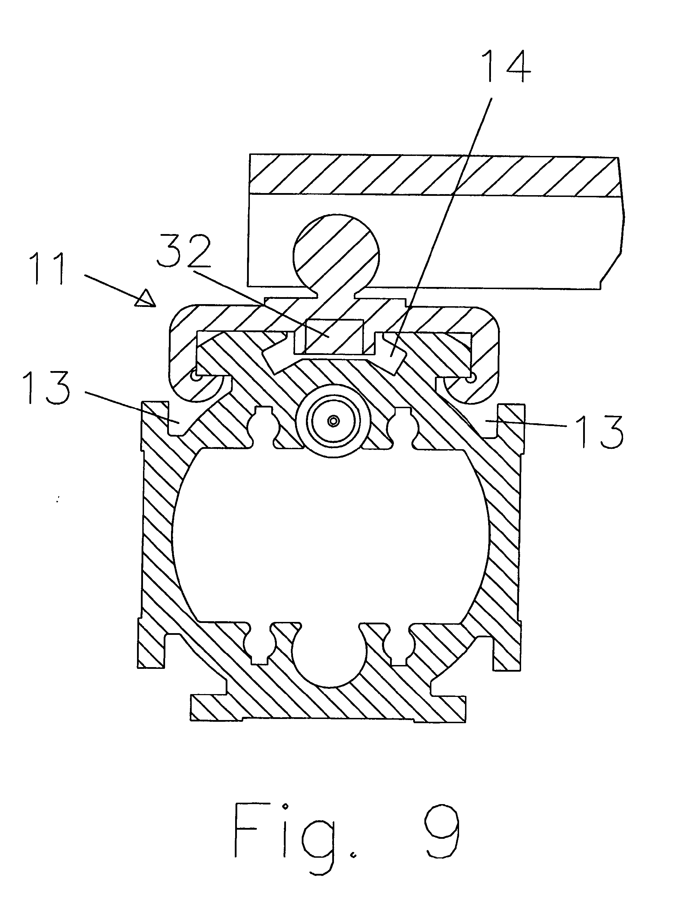

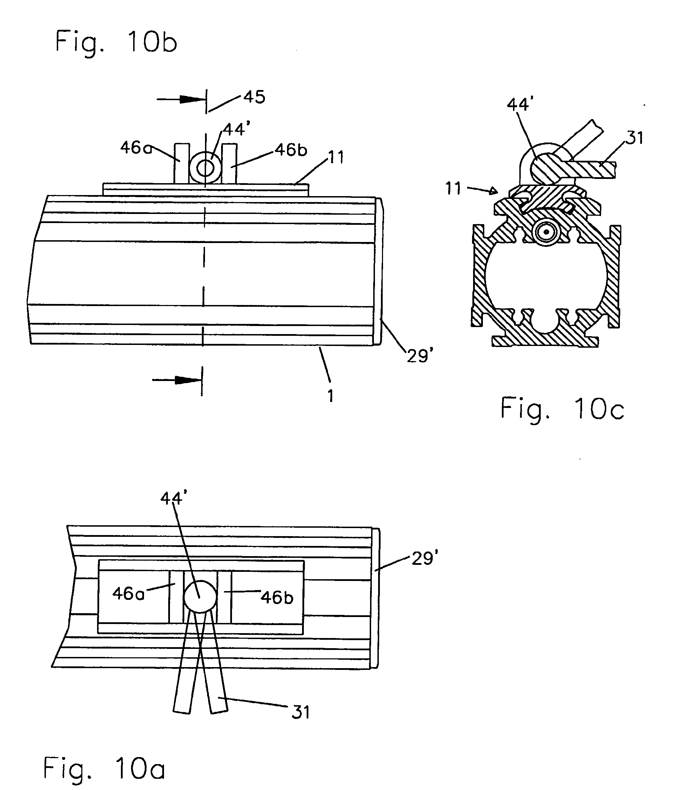

Während die Fig. 2c und 10c die gleiche Querschnittsform des Schlittens zeigen, ist in Fig. 9 eine Querschnittsform eines Schlittens 11' zu erkennen, die sich dadurch unterscheidet, daß dieser Schlitten 11' nicht nur auf der Außenseite, in welcher die Mittelnut 14 angeordnet ist, aufliegt, sondern diese umgreift, indem er bis in die angrenzenden Ecknuten 13 eingreift und sich an den dort jeweils parallel zur Außenfläche, welche die Mittelnut 14 trägt, parallelen Flanken abstützt, wodurch ein Abheben des Schlittens 11' verhindert wird. Im mittleren Bereich reicht der Querschnitt des Schlittens 11' ebenfalls in die Mittelnut 14 hinein, insbesondere ist in diesem Querschnitt des Schlittens 11' wiederum - wie in den anderen Ausführungsformen - der Magnet 32 angeordnet, wie in der Regel bei allen Schlitten 11, 11', jedoch reicht der Schlitten 11' nicht in die Fortsätze 14a, b der Mittelnut, also in den hinterschnittenen Teil der Mittelnut 14, hinein.

Ferner zeigen die Fig. 2 einerseits sowie 9 und 10 andererseits unterschiedliche Gelenke auf der Außenseite des Schlittens 11 zum Befestigen der Verbindungsstange 31 zum zu überwachenden Bauteil hin.

In den Fig. 2 ragt vom Schlitten ein Kugelfortsatz 44 bezüglich des Profiles 1 radial nach außen, und wird von der im Querschnitt U-förmigen Verbindungsstange 31 übergriffen, in deren Innerem Freiraum der Kugelfortsatz 44 angeordnet ist, und insbesondere auch in Erstreckungsrichtung der Verbindungsstange 31 verschiebbar ist.

Dadurch ist eine Beweglichkeit der Verbindungsstange 31 um die durch den Kugelfortsatz 44 verlaufende Querachse 45 des Profiles unbeschränkt möglich, und um eine parallel zur Längsrichtung 10 durch den Kugelfortsatz 44 verlaufende Achse je nach Dimensionierung des Rohr-Profiles der Verbindungstange 31 um bis zu ca. 150° möglich.

Die Lösung gemäß Fig. 10 weist dagegen einen Kugelfortsatz 44' am profilseitigen Ende der Verbindungsstange 31 auf, der zwischen zwei Halteplatten 46a, b schwenkbar gehalten ist, die mit dem Schlitten 11 fest verbunden sind und von diesem in Querrichtung zum Rohrprofil 1 im Abstand zueinander abstreben.

Dadurch erhält die Verbindungsstange 31 eine Beweglichkeit um die Querachse 45 von etwa 20', bis also die Verbindungsstange 31 an einer der Halteplatten 46a, b anstößt.

Eine Beweglichkeit um eine zur Profilrichtung 1 parallele Schwenkachse ist über mindestens 180°, etwa 220° gegeben, bis die Verbindungsstange 31 auf dem Schlitten 11 oder dem Profil 1 aufliegt.

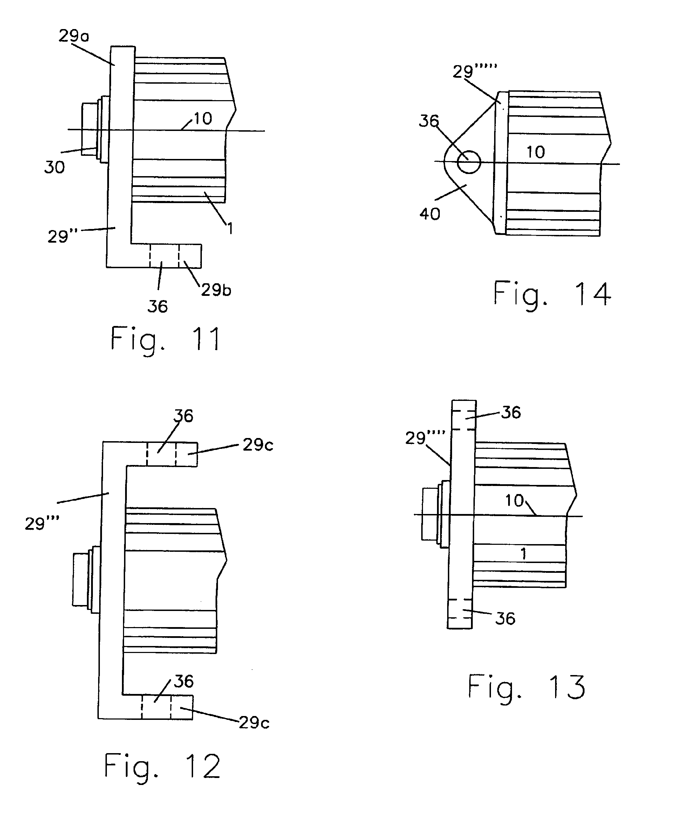

Fig. 11 zeigt eine weitere Variante eines Abschluß-Deckels 29", der L-förmig gestaltet ist und mit seinem einen Schenkel auf der Stirnfläche des Profiles 1 aufliegt und mit dieser verbunden, beispielsweise verschraubt, ist und auch eine Durchgangsöffnung für den Stecker 30 aufweisen kann.

Der hierzu im Winkel stehende zweite Schenkel 29b verläuft damit parallel zur Längsrichtung 10 im Abstand zum Profil 1 und kann eine Bohrung 36 zum Verschrauben an einem anderen Bauteil der Umgebung aufweisen.

Demgegenüber weist der Deckel 29"' gemäß Fig. 12 zwei solcher parallel zur Längsrichtung 10 des Profiles 1 an den Enden des mittleren Schenkels 29 in gleicher Richtung abstrebende Befestigungs-Schenkel 29b, 29c auf, um bei der Befestigung mittels dortiger Bohrungen 36 flexibler zu sein.

Wie Fig. 13 mit der Variante des Deckels 29"" zeigt, kann dieser auch plattenförmig mit genügendem Überstand auf der Stirnfläche des Profiles 10 aufsitzen, so daß dann die Verschraubung über Bohrungen 36 im Überstand erfolgt.

Fig. 14 zeigt einen Deckel 29""', bei dem der Korpus des Deckels nicht über der Außenkontur des Profils 10 vorstehen muß, jedoch von der Hauptebene des Deckels eine Öse 40 mit einer Bohrung 36, die einstückig mit dem Korpus des Deckels ausgebildet ist, absteht zur Befestigung der Meßvorrichtung beispielsweise in schmalen, langen Bauteilen.

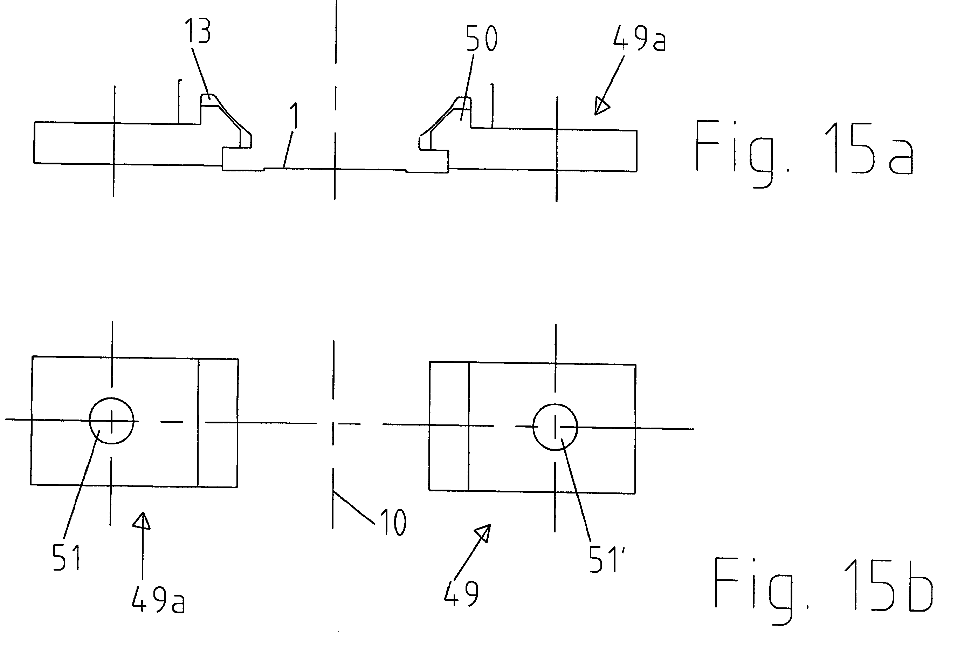

Die Figuren 15 - 17 zeigen nur einen Teil der Außenkontur des Profiles 1 und in Prinzipdarstellungen dessen Befestigung über Halteklammern, betrachtet in Längsrichtung 10 (Fig. 15a, 16a, 17a) und quer zur Längsrichtung 10 (Fig. 15b, 16b, 17b).

In allen Fällen greifen dabei Halteplatten 49a,b,c in die unteren der Ecknuten 13 des Profiles 1 ein und erstrecken sich von diesem aus nach außen, wobei im Überstand dieser Halteplatten 49a,b,c über Durchgangsbohrungen 51 eine Verschraubung mit einem Bauteil der Umgebung möglich ist.

In Fig. 15a greifen die Klemmplatten 49a mit einem Fortsatz 50, der mit etwa trapezförmigem Querschnitt passend in die Ecknut 13 ausgestattet ist, in diese Ecknut 13 ein. Wegen der hinterschnittenen Form des Fortsatzes 50 ist ein Einschieben der Klemmplatten 49a nur von der Stirnseite her in die Ecknuten 13 möglich.

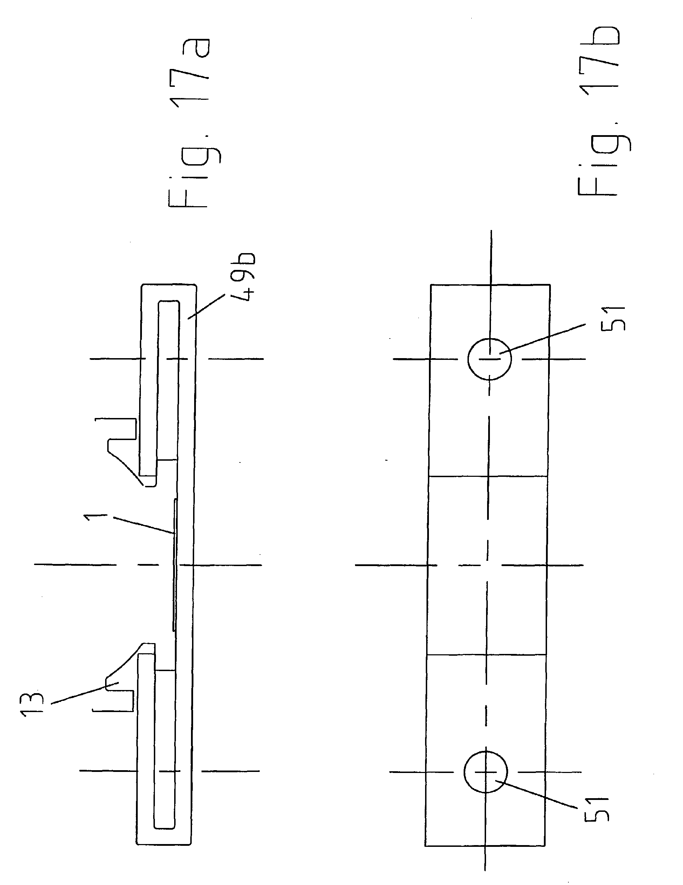

Gleiches gilt für die Lösung gemäß Fig. 17, in der nicht von den beiden Seiten separate Klammern, sondern eine gemeinsame, C-förmige Klammer 49b mit ihren freien Enden von gegenüberliegenden Seiten aus in die Ecknuten 13 des Profiles 1 eingreift, und mit seinem verbindenden Schenkel unter dem Profil 1 durchläuft, welches auf der Innenseite dieses verbindenden Schenkels der Klemmplatte 49b aufsitzt.

Entsprechend erstrecken sich die Bohrungen 51 und eine entsprechende Verschraubung 37 mit derartigen Buchsen 38 in den Schenkeln im seitlichen Überstand der Klammer jeweils durch zwei Schenkel der Klemmplatte 49b hindurch.

Dementsprechend kann auch diese Klemmplatte 49b nur durch stirnseitiges Einschieben in das Profil 1 mit diesem verbunden werden.

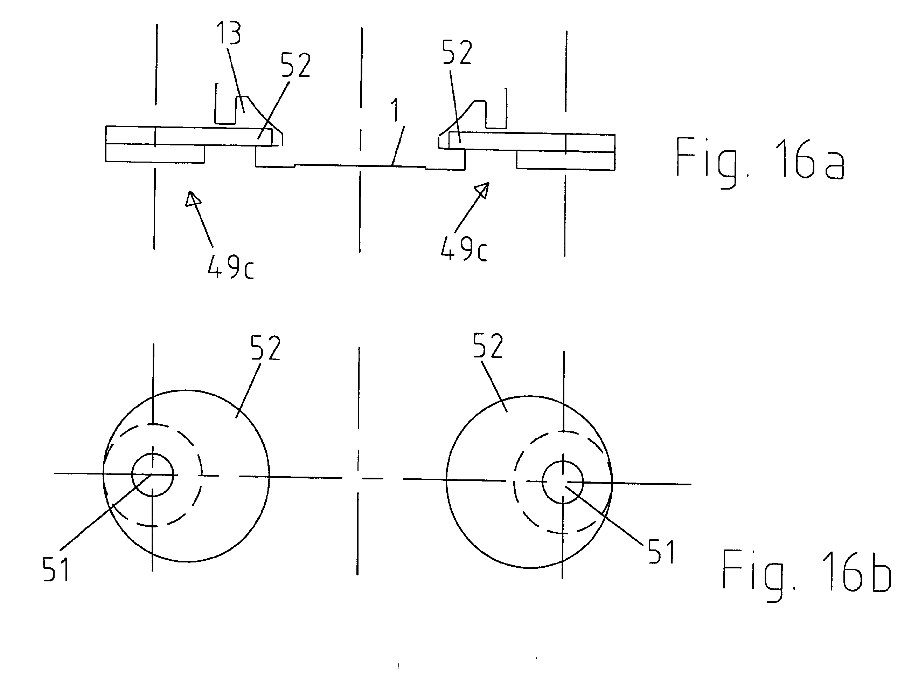

Anders dagegen die Lösung gemäß Fig. 16:

Dabei handelt es sich um einzelne Klammern 49c. Dabei steht von der Durchgangsbohrung 49 ein Fortsatz 52 einseitig vor und zwar mit einer so geringen Breite oder gerundet, so daß auch nach dem Verschrauben der Klemmplatten 49c durch die Bohrung 51 hindurch durch Verschwenken um die Bohrung 51 herum der Fortsatz 52 in Eingriff mit der Nut 13 des Profiles 1 gebracht werden kann.

Zu diesem Zweck besteht die Klemmplatte 49c dabei aus zwei übereinander gelegten, unterschiedlich großen, exzentrisch zueinander angeordneten Kreisscheiben, wobei sich die Bohrung 51 durch beide Scheiben hindurch erstreckt, jedoch zentrisch zur kleineren der Scheiben liegt. Die beiden Kreisscheiben können einstückig miteinander, mehrstückig und miteinander verbunden oder als separate Bauteile ausgeführt sein, wobei die Dicke der kleineren Kreisscheibe etwa der Dicke der klemmenden Flanke des Profiles 1 entspricht.

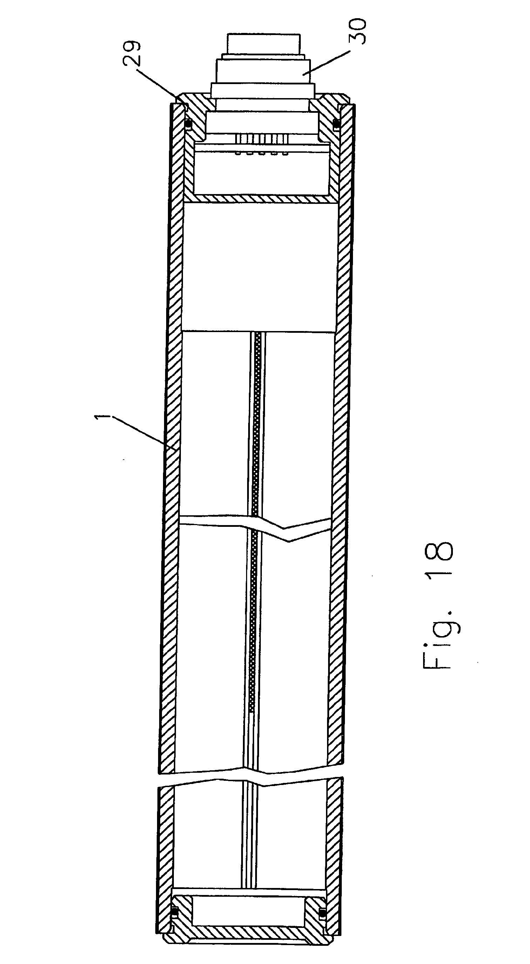

Fig. 18 zeigt einen Längsschnitt ähnlich der Fig. 4a, 4b, mit der Besonderheit, daß der stirnseitige Abschlußdeckel 29, in dem sich der Stecker 30 befindet, bei der Lösung gemäß Fig. 18 topfförmig ausgebildet ist und somit entsprechend der Tiefe des Topfes weiter in das Profil 1 hinein erstreckt und mit dem Boden des Topfes das Innere des Deckels 29 gegenüber dem Inneren des Profiles 1 abschottet, was insbesondere zur Verbesserung der EMV-Abschirnmung notwendig ist. Die zum Stecker 30 geführten Leitungen 40 werden mittels Bohrungen und dort eingebaute Filterdurchführungen 39 durch den Boden des topfförmigen Deckels 29 hindurchgeführt und nochmals separat abgedichtet.

### BEZUGSZEICHENLISTE

- 1: Rohr-Profil
- 2: Wellenleiter-Einheit
- 3: Wellenleiter
- 4: Außenfläche
- 5: "
- 6: "
- 7: "
- 8: Querrichtung
- 9: Längs-Mittelebene
- 10: Längsrichtung
- 11: Schlitten
- 12: Auswerte-Elektronik
- 13: Ecknut (Aussennut)
- 14: Mittelnut (Aussennut)
- 15: Flanke
- 16: Ecke
- 17: Mittelteil
- 18: Dach
- 19: Platinennut
- 20: Wellenleiternut
- 21: Kreiskontur
- 22: Planfläche
- 23: Hauptplatine
- 24: Nebenplatine
- 25: Platinenhalter
- 26: Querverbinder
- 27: aufgeweiteter Innenquerschnitt
- 28: Ringnut
- 29: Abschlußdeckel
- 30: Stecker
- 31: Verbindungsstange
- 32: Magnet
- 33: Anschlußplatte
- 34: Außennut
- 35: Schraube
- 36: Bohrung
- 37: Verschraubung
- 38: Buchse
- 39: Filterdurchführung
- 40: Leitung
- 41 42: Schraube
- 43: Einbuchrung
- 44: Kugelfortsatz
- 45: Querachse
- 46: Halteplatte
- 47: Begrenzungskreis
- 48: Öse
- 49a,b,c: Klemmplatten
- 50: Fortsatz
- 51: Bohrung
- 52: Fortsatz

## Patentansprüche

1. Magneto-striktive Wegmess-Vorrichtung mit
- einem lang gesteckten Gehäuse in Form eines hohlen, umfänglich geschlossenen Profiles (1) mit wenigstens einer planen Außenfläche (4-7), wobei
- die Außenkontur des Profils (1) eine Rechteck-Grundform ist,
- einer Wellenleiter-Einheit (2) im Inneren des Gehäuses, wobei der Wellenleiter (3) der Wellenleiter-Einheit (2) in Längsrichtung (10) des Profiles (1) verläuft,
- einer Auswerte-Elektronik (12),
**dadurch gekennzeichnet, dass**
- die Außenkontur des Profiles (1) jeder Außenfläche (4-7) zugeordnet wenigstens ein Paar von Außennuten (13, 14) aufweist und
- die Innenkontur des Profiles (1) vollständig im Inneren eines Begrenzungskreises (47) liegt, von dem aus nach außen zur Außenkontur noch eine ausreichende Mindestwandstärke verbleibt.

2. Wegmess-Vorrichtung nach Anspruch 1,
**dadurch gekennzeichnet, dass**
die Außenflächen (4 bis 7) im rechten Winkel zueinander verlaufen, und Außennuten (13, 14) als Ecknuten (13) in allen Eckbereichen der Außenkontur umfassen.

3. Wegmess-Vorrichtung nach einem der vorhergehenden Ansprüche,
**dadurch gekennzeichnet, dass**
die Ecknuten (13) eine trapezförmige Grundform besitzen, und insbesondere von der zu einer Außenfläche (4 bis 7) parallelen Flanke (15) die gegenüberliegende Ecke (16) in Richtung der Erstreckung des Querschnittes der Nut zurück versetzt ist.

4. Wegmess-Vorrichtung nach einem der vorhergehenden Ansprüche,
**dadurch gekennzeichnet, daß**
- in einer der Außenflächen (7a) eine Mittelnut (14) angeordnet ist, und
- die Außennuten (13, 14) hinterschnittene Nuten sind.

5. Wegmess-Vorrichtung nach einem der vorhergehenden Ansprüche,
**dadurch gekennzeichnet, dass**
die Mittelnut (14) den zurückversetzten mittleren Bereich der Außenfläche (7a) darstelle.

6. Wegmess-Vorrichtung nach einem der vorhergehenden Ansprüche 4 oder 5, mit wenigstens einem Schlitten (11), der auf der Außenseite des Profiles (1) in dessen Längsrichtung (10) mittels des Profiles (1) geführt ist
**dadurch gekennzeichnet, dass**
- der Schlitten (11) in der Mittelnut (14) geführt ist, und
- der Schlitten (11) ein Mittelteil (17) aufweist, welches in der Nut geführt ist, sowie ein Dach (18), welches die Nut überdeckt, und insbesondere
- der Schlitten (11) mit den Unterseiten der freien Enden (18a) seines Daches (18) an der die Nut begrenzenden Außenfläche (7) anliegt und sich abstützt.

7. Wegmess-Vorrichtung nach einem der vorhergehenden Ansprüche,
**dadurch gekennzeichnet, dass**
- auf zwei einander gegenüberliegenden Seiten der Innenkontur einander gegenüberliegend entsprechende Paare von Nuten (19, 20) vorhanden sind,
- die in parallel verlaufenden Planflächen (22a, b) der Innenkontur angeordnet sind.

8. Wegmess-Vorrichtung nach Anspruch 7,
**dadurch gekennzeichnet, dass**
symmetrisch zur Längs-Mittelebene (9) zwei Paare von Platinennuten (19 a, b) zur Aufnahme von Platinen angeordnet sind.

9. Wegmess-Vorrichtung nach Anspruch 8,
**dadurch gekennzeichnet, dass**
die Platinennuten (19a, b) einen hinterschnittenen Querschnitt in Form einer Kreiskontur und den Boden der Kreiskontur vertiefenden Rechteck-Kontur aufweisen.

10. Wegmess-Vorrichtung nach einem der Ansprüche 6 bis 9,
**dadurch gekennzeichnet, dass**
ein Paar von Leiter-Nuten (20a,b), die zur Aufnahme einer Wellenleiter-Einheit (2) dienen, auf der Längs-Mittelebene (9) angeordnet ist.

11. Wegmess-Vorrichtung nach Anspruch 10,
**dadurch gekennzeichnet, dass**
die Leiter-Nuten (20a, b) einen hinterschnittenen Querschnitt mit einem mehr als 180° umfassenden Segment einer Kreis-Kontur aufweisen.

12. Wegmess-Vorrichtung nach einem der vorhergehenden Ansprüche,
**dadurch gekennzeichnet, dass**
wenigstens ein Teil der Auswerteelektronik (12) im Inneren des Profiles (1) auf wenigstens einer Platine (23, 24) angeordnet ist.

13. Wegmess-Vorrichtung nach Anspruch 12,
**dadurch gekennzeichnet, daß**
- die Platine wenigstens eine Hauptplatine (23) sowie eine Nebenplatine (24) umfaßt,
- Hauptplatine (23) und Nebenplatine (24) über wenigstens einen Platinenhalter (25a, 25b) und/oder einen Querverbinder (26) miteinander verbunden sind und im fertig miteinander verbundenen Zustand gemeinsam mit der Wellenleitereinheit (2) in das Profil (1) einschiebbar sind.

14. Wegmess-Vorrichtung nach einem der vorhergehenden Ansprüche,
**dadurch gekennzeichnet, dass**
das Profil (1) in seinen Endbereichen einen aufgeweiteten Innenquerschnitt (27a,b) aufweist dergestalt, daß die im übrigen Verlauf des Profiles (1) vorhandene Innenkontur zu einer Kreiskontur erweitert ist.

15. Wegmess-Vorrichtung nach Anspruch 13,
**dadurch gekennzeichnet, dass**
der aufgeweitete Innenquerschnitt (27) eine im Innenumfang ausgebildete Ringnut (28) zum Einsetzen eines Sprengringes nahe am stirnseitigen Ende des Profiles (1) aufweist.

16. Wegmess-Vorrichtung nach einem der vorhergehenden Ansprüche 6 - 13,
**dadurch gekennzeichnet, dass ist.**
die Wegmeßvorrichtung symmetrisch zu wenigstens einer Längsebene ausgebildet und für redundante Benutzung mit zwei Wellenleitereinheiten (2) sowie zwei Auswerteelektroniken (12) und zwei Steckern (30) ausgestattet

## Claims

1. A magnetostrictive displacement measuring device, comprising:
- an elongated housing configured as a hollow, circumferentially closed profile (1) including at least one planar outer surface (4-7), wherein an outer contour of the profile (1) has a rectangular basic shape;
- a wave conductor unit (2) arranged in an interior of the housing, wherein the wave conductor (3) of the wave conductor unit (2) extends in a longitudinal direction (10) of the profile (1); and
- processing electronics (12),
- wherein the outer contour of the profile (1) includes at least a pair of exterior grooves (13, 14) that are associated with each outer surface (4-7), and
- wherein an inner contour of the profile (1) is completely arranged in an interior of a defining circle (47) from which a sufficient minimum wall thickness remains in outward direction to the exterior contour.

2. The displacement measuring device according to claim 1, wherein the outer surfaces (4-7) extend at a right angle relative to one another and include exterior grooves (13, 14) configured as corner grooves (13) in all corner portions of the outer contour.

3. The displacement measuring device according to one of the preceding claims, wherein the corner grooves (13) have a trapezoid basic shape and in particular from a flank (15) that is parallel to an outer surface (4 through 7) an opposite corner (16) is recessed in a direction of an extension of a cross-section of the groove.

4. The displacement measuring device according to one of the preceding claims,
- wherein a middle groove (14) is arranged in one of the outer surfaces (7a), and
- wherein the exterior grooves (13, 14) are undercut grooves.

5. The displacement measuring device according to one of the preceding claims, wherein the middle groove (14) forms the recessed center portion of the outer surface (7a).

6. The displacement measuring device according to one of the preceding claims 4 or 5 including at least one slide (11) which is supported on an outside of the profile (1) in longitudinal direction (10) of the profile (1) through the profile (1),
- wherein the slide (11) is supported in the center groove (14),
- the slide (11) includes a center component (17) which is supported in the groove and a roof (18) which covers the groove, and in particular
- wherein the slide (11) contacts an outer surface (7) defining the groove and the slide (11) is supported at the outer surface (7) with bottom sides of free ends (18a) of the roof (18) of the slide.

7. The displacement measuring device according to one of the preceding claims,
- wherein respective pairs of grooves (19, 20) are provided opposite to one another on two opposite sides of the inner contour,
- wherein the pairs of grooves are arranged in planar surfaces (22a, b) of the inner contour which extend parallel to one another.

8. The displacement measuring device according to claim 7,
wherein two pairs of circuit board grooves (19a, b) for supporting circuit boards are arranged symmetrical to the longitudinal center plane (9).

9. The displacement measuring device according to claim 8, wherein the circuit board grooves (19a, b) include an undercut cross-section configured as a circular contour and as a rectangular contour recessing a base of the circular contour.

10. The displacement measuring device according to one of the claims 6 through 9, wherein a pair of conductor grooves (20a, b) which are used for receiving a wave conductor unit (2), is arranged on the longitudinal center plane (9).

11. The displacement measuring device according to claim 10, wherein the conductor grooves (20a, b) include an undercut cross-section with a segment of a circular contour including more than 180°.

12. The displacement measuring device according to one of the preceding claims, wherein at least a portion of the processing electronics (12) is arranged within an interior of the profile (1) on at least one circuit board (23, 24).

13. The displacement measuring device according to claim 12,
- wherein the circuit board includes at least one main circuit board (23) and one secondary circuit board (24), and
- wherein the main circuit board (23) and the secondary circuit board (24) are connected with one another through at least one circuit board holder (25a, 25b) and/or one transversal connecter (26) and are insertable in the profile (1) in completely connected condition together with the wave conductor unit (2).

14. The displacement measuring device according to one of the preceding claims, wherein the profile (1) includes an expanded inner cross-section (27a, b) in its end portions so that an inner contour of the other portions of the profile (1) is expanded to form a circular contour.

15. The displacement measuring device according to claim 13, wherein the expanded inner cross-section (27) includes a radial groove (28) configured in an inner circumference for inserting a retainer proximal to a front end of the profile (1).

16. The displacement measuring device according to one of the preceding claims 6 through 13, wherein the distance measuring device is configured symmetrical to at least one longitudinal plane and configured for redundant use with two wave conductor units (2) and two processing electronics (12) and two plugs (30).

## Revendications

1. Dispositif magnétostrictif de mesure de déplacement avec
- un coffret allongé en forme d'un profilé creux (1), fermé sur la périphérie avec au moins une surface externe plane (4-7),
- le contour externe du profilé (1) ayant une forme de base rectangulaire,
- une unité de guide d'ondes (2) à l'intérieur du coffret, le guide d'ondes (3) de l'unité de guide d'ondes (2) s'étendant dans le sens longitudinal (10) du profilé (1),
- une électronique d'évaluation (12),
cara,ctérisé en ce que
- le contour externe du profilé (1) de chaque surface externe (4-7) associée présente au moins une paire de rainures externes (13, 14) et
- le contour interne du profilé (1) se trouve complètement à l'intérieur d'un cercle de délimitation (47) depuis lequel il reste encore une épaisseur de paroi minimale suffisante vers l'extérieur en direction du contour externe.

2. Dispositif de mesure de déplacement selon la revendication 1, **caractérisé en ce que** les surfaces externes (4 à 7) s'étendent en angle droit entre elles et comportent des rainures externes (13, 14) en tant que rainures angulaires (13) dans toutes les zones angulaires du contour externe.

3. Dispositif de mesure de déplacement selon l'une des revendications précédentes, **caractérisé en ce que** les rainures angulaires (13) ont une forme de base trapézoïdale et présente en particulier un flanc (15) parallèle à une surface externe (4 à 7), et **en ce que** l'angle (16) opposé est placé en retrait en direction de l'extension de la section transversale de la rainure.

4. Dispositif de mesure de déplacement selon l'une des revendications précédentes, **caractérisé en ce qu'**
- il est disposé dans l'une des surfaces externes (7A) une rainure médiane (14) et
- les rainures externes (13, 14) sont des rainures contre-dépouillées.

5. Dispositif de mesure de déplacement selon l'une des revendications précédentes, **caractérisé en ce que** la rainure médiane représente la zone médiane placée en retrait de la surface externe (7a).

6. Dispositif de mesure de déplacement selon l'une des revendications précédentes 4 ou 5 avec au moins un coulisseau (11) qui est guidé sur la face externe du profilé (1) dans sa direction longitudinale (10) au moyen du profilé (1), **caractérisé en ce que**
- le coulisseau (11) est guidé dans la rainure médiane (14) et
- le coulisseau (11) présente une partie médiane (17) qui est guidée dans la rainure ainsi qu'un toit (18) qui recouvre la rainure et en particulier
- le coulisseau (11) s'applique et prend appui par les faces inférieures des extrémités libres (18a) de son toit (18) contre la surface externe (7) limitant la rainure.

7. Dispositif de mesure de déplacement selon l'une des revendications précédentes **caractérisé en ce qu'**
- il est prévu sur deux faces opposées du contour interne, des paires correspondantes mutuellement opposées de rainures (19, 20)
- qui sont disposées dans des surfaces planes parallèles (22a, b) du contour interne.

8. Dispositif de mesure de déplacement selon la revendication 7, **caractérisé en ce que** pour le logement de platines, deux paires de rainures de platine (19a, b) sont disposées symétriquement au plan médian longitudinal (9).

9. Dispositif de mesure de déplacement selon la revendication 8, **caractérisé en ce que** les rainures de platine (19a, b) présentent une section transversale contre-dépouillée en forme d'un contour circulaire et d'un contour rectangulaire rendant plus profond le fond du contour circulaire.

10. Dispositif de mesure de déplacement selon l'une des revendications 6 à 9, **caractérisé en ce qu'**une paire de rainure conductrices (20a, b) servant au logement d'une unité de guide d'ondes est disposée sur le plan médian longitudinal (9).

11. Dispositif de mesure de déplacement selon la revendication 10, **caractérisé en ce que** les rainures de guide (20a, b) présentent une section transversale contre-dépouillée avec un segment d'un contour circulaire, faisant plus de 180°.

12. Dispositif de mesure de déplacement selon l'une des revendications précédentes **caractérisé en ce qu'**au moins une partie de l'électronique d'évaluation (12) est disposé à l'intérieur du profilé (1) sur au moins une platine (23, 24).

13. Dispositif de mesure de déplacement selon la revendication 12, **caractérisé en ce que**
- la platine comprend au moins une platine principale (23) ainsi qu'une platine auxiliaire (24),
- la platine principale (23) et la platine auxiliaire (24) sont reliées entre elles par au moins un porte-platine (25a, 25b) et/ou un connecteur transversal (26) et sont insérables dans le profilé (1), et ce, à l'état fini relié entre elles en commun avec l'unité de guides d'ondes (2).

14. Dispositif de mesure de déplacement selon l'une des revendications précédentes, **caractérisé en ce que** le profilé (1) présentant dans ses zones d'extrémité une section transversale interne élargie (27a, b) de sorte que le contour interne se trouvant dans la continuité du profilé (1) est élargi en un contour circulaire.

15. Dispositif de mesure de déplacement selon la revendication 13, **caractérisé en ce que** la section transversale interne élargie (27) présente une rainure annulaire (28) ménagée dans la périphérie interne pour l'insertion d'une bague d'arrêt près de l'extrémité en face avant du profilé (1).

16. Dispositif de mesure de déplacement selon l'une des revendications 6 à 13, **caractérisé en ce que** le dispositif de mesure de déplacement est réalisé symétriquement à au moins un plan longitudinal et est configuré pour une utilisation redondante avec deux unités de guide d'ondes (2) ainsi que deux électroniques d'évaluation (12) et deux connecteurs (30).
